Europäisches Patentamt

European Patent Office

Office européen des brevets

(19)

(11) Numéro de publication : **0 065 452**
**B1**

(12) ## FASCICULE DE BREVET EUROPÉEN

(45) Date de publication du fascicule du brevet :
24.04.85

(51) Int. Cl.⁴ : **E 03 D 11/02**

(21) Numéro de dépôt : **82400818.9**

(22) Date de dépôt : **04.05.82**

(54) **Installation sanitaire comportant un dispositif anti-aspiration.**

(30) Priorité : **08.05.81 FR 8109211**

(43) Date de publication de la demande :
**24.11.82 Bulletin 82/47**

(45) Mention de la délivrance du brevet :
**24.04.85 Bulletin 85/17**

(84) Etats contractants désignés :
**AT BE CH DE GB IT LI LU NL SE**

(56) Documents cités :
**FR-A- 864 059**
**GB-A- 22 046**
**US-A- 2 044 243**
**US-A- 2 122 834**
**US-A- 3 107 359**

(73) Titulaire : **Ragot, Claude**
**Place du 11 Novembre**
**F-56500 Locmine (FR)**

(72) Inventeur : **Ragot, Claude**
**Place du 11 Novembre**
**F-56500 Locmine (FR)**

(74) Mandataire : **Wagret, Jean-Michel**
**Propi Conseils 23 rue de Léningrad**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention concerne un appareil sanitaire du type comportant un bassin apte à recevoir l'eau sanitaire pendant la période d'utilisation, cet appareil étant relié à cet effet à une canalisation d'alimentation branchée sur le réseau de distribution générale ; et l'invention concerne plus spécialement un dispositif antirefoulement propre à empêcher toute remontée de l'eau contenue dans le bassin vers le réseau d'alimentation générale par un effet d'aspiration en cas de dépression accidentelle intervenant dans ce réseau.

On connaît des dispositifs interposés entre un appareil sanitaire et le réseau général d'alimentation en eau de la ville et visant à éviter le phénomène parasite et accidentel d'aspiration de l'eau vers l'amont lorsque le réseau se trouve accidentellement mis en dépression, à condition que l'alimentation en eau du bassin constituant l'appareil débouche dans le bassin, à un niveau inférieur au niveau de débordement de ce dernier ; dans ce cas on peut accidentellement voir le bassin, rempli d'une eau usée et polluée, étant en communication avec le réseau (le robinet d'alimentation n'étant pas fermé) et si le réseau se trouve alors accidentellement en position de dépression on peut voir l'eau polluée du bassin aspirée vers le réseau d'alimentation générale et répandre dans ce réseau une source de pollution ; cet accident pourrait survenir lorsque par exemple l'appareil sanitaire considéré est situé dans des étages supérieurs et en cas d'une très forte demande en position inférieure.

Pour remédier à ce risque, les règlements prévoient l'interposition d'un dispositif anti-aspiration avec mise à l'air libre interposé entre l'appareil sanitaire à alimentation directe et le réseau général ; le dispositif anti-aspiration est maintenu en position fermée par la pression interne du réseau tandis qu'en cas de dépression au sein du réseau, le dispositif anti-aspiration est apte à mettre la canalisation sur laquelle il est interposé en communication avec l'air libre. Ainsi, en cas de dépression en amont, l'aspiration provoque une introduction d'air atmosphérique dans le réseau, sans engendrer une aspiration parasite des eaux usées contenues dans le bassin de l'appareil sanitaire à alimentation directe.

Les appareils de ce type sont complexes par conséquent coûteux et ne sont pas d'une fiabilité sûre ; étant donné qu'ils restent pratiquement constamment en position de fermeture, ceci risque de provoquer un blocage par gommage des surfaces en contact et qui ne se séparent pas lorsque l'appareil doit répondre à une dépression et ouvrir par conséquent passage vers l'air atmosphérique.

L'invention vise à remédier à cet inconvénient et permet de réaliser un appareil sanitaire alimenté directement au niveau du bassin tout en assurant des conditions parfaites de sécurité en s'opposant notamment à tout phénomène parasité de refoulement et d'aspiration vers l'amont des eaux usées contenues dans le bassin.

L'invention s'applique plus particulièrement à un appareil sanitaire du type WC et/ou bidet ; et il sera décrit plus spécialement en rapport avec cette application ; mais l'invention est applicable à tout appareil sanitaire du type comportant un bassin alimenté en eau et contenant l'eau sanitaire en période d'utilisation entre le remplissage du bassin et sa vidange vers le réseau d'évacuation des eaux usées ; et l'invention sera notamment applicable à tout dispositif sanitaire tel que lavabo, baignoire, bidet.

A cet effet, l'invention concerne un appareil sanitaire du type comportant un bassin apte à contenir l'eau sanitaire en période d'utilisation et alimenté en eau par une canalisation raccordée au réseau de distribution générale, l'appareil comportant des moyens aptes à empêcher tout refoulement par aspiration depuis le bassin vers le réseau du type comportant une zone intermédiaire de mise à l'air libre alimentée par la canalisation d'alimentation en eau sanitaire, raccordée au réseau et débouchant dans ladite chambre, avec interposition en amont de la zone d'un obturateur réglable tel que robinet ou autre, cet appareil étant caractérisé en ce que ladite zone est constituée d'une chambre comportant une paroi de surverse ou déversoir par laquelle l'eau est apte à s'échapper par gravité vers le bassin, le niveau de ladite surverse ou déversoir étant situé plus haut par rapport au fil de l'eau du bassin lorsque ce dernier a atteint son niveau de remplissage maximum et en ce que la chambre intermédiaire est en communication avec l'air libre par une ouverture communiquant avec la partie supérieure de ladite chambre.

On comprend que dans ces conditions, l'alimentation en eau du bassin se faisant par déversement depuis la chambre intermédiaire, l'aspiration éventuelle intervenant en amont ne pourra affecter que l'eau non polluée contenue dans ladite chambre, sans que l'eau (éventuellement polluée) du bassin puisse remonter depuis son niveau de remplissage maximum jusqu'au fil de la paroi de surverse.

Selon une autre caractéristique, l'appareil comporte sur le pourtour du bassin une goulotte sensiblement plane entourant au moins partiellement le bord supérieur dudit bassin, située dans un plan sensiblement horizontal et recueillant l'eau déversée depuis la chambre intermédiaire, l'eau étant ainsi apte à se déverser et à remplir le bassin en formant un film recouvrant les parois de ce dernier.

D'autres caractéristiques et avantages de l'invention ressortiront de la description qui suit et qui est donnée en rapport avec une forme de réalisation préférentielle concernant une application de l'invention à une cuvette water-closet à alimentation directe sans effet de chasse présentée à titre d'exemple non limitatif et en se référant aux dessins annexés.

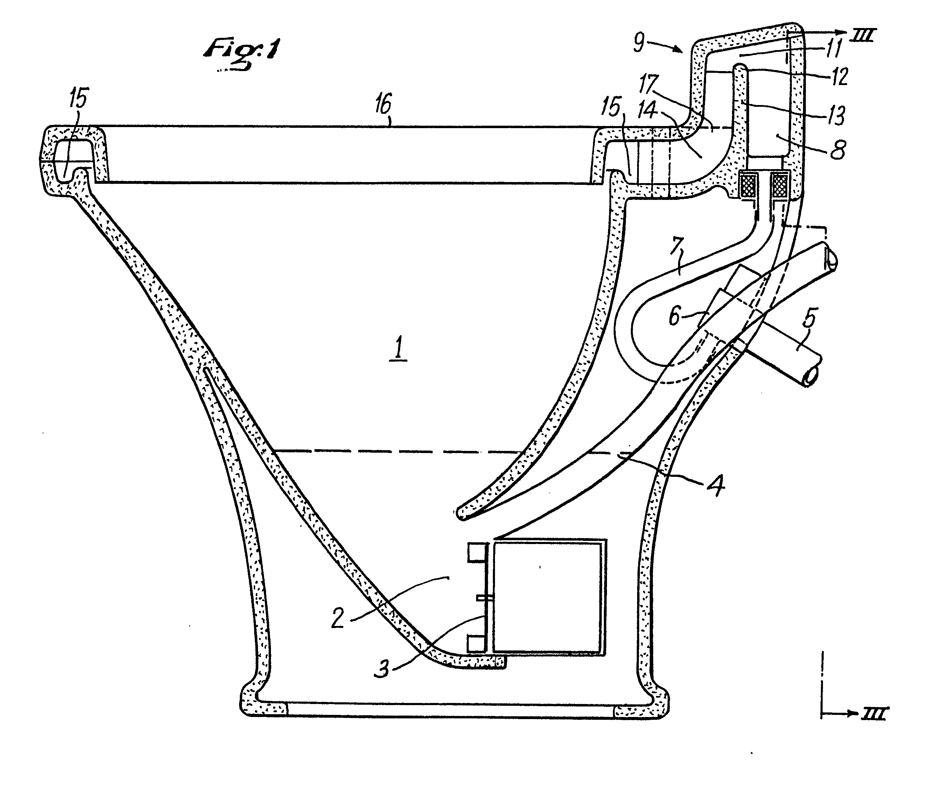

La figure 1 représente une vue en coupe longitudinale de la cuvette de water-closet pourvue du dispositif anti-aspiration selon l'invention.

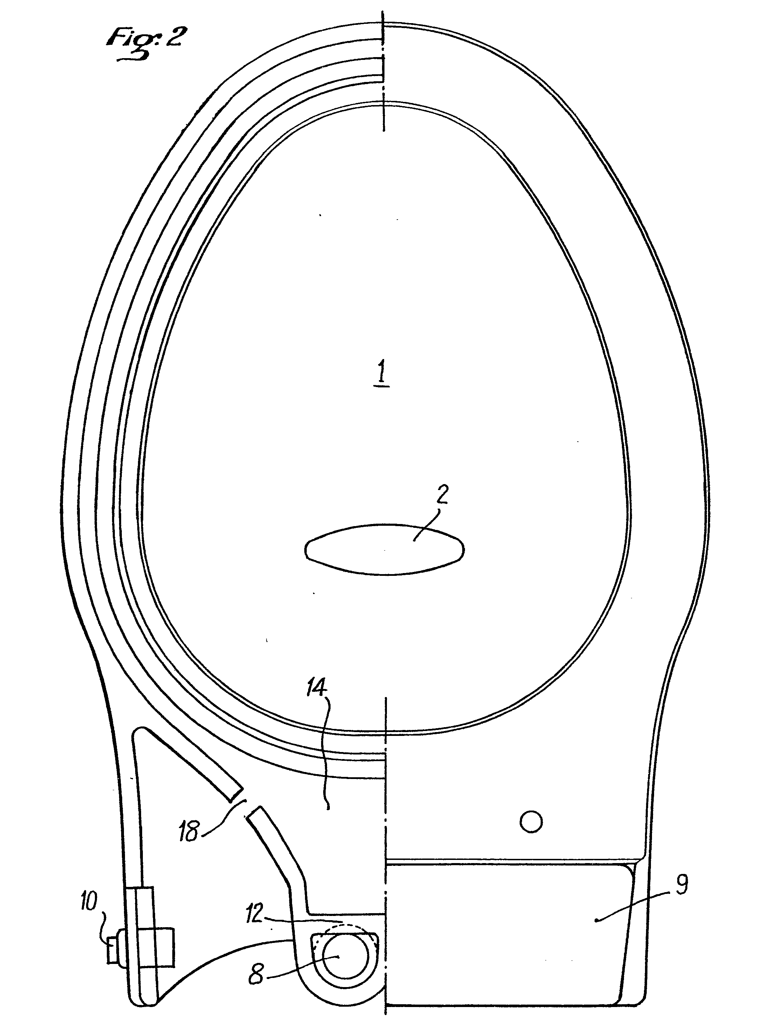

La figure 2 représente une vue en plan de la même cuvette avec coupe partielle.

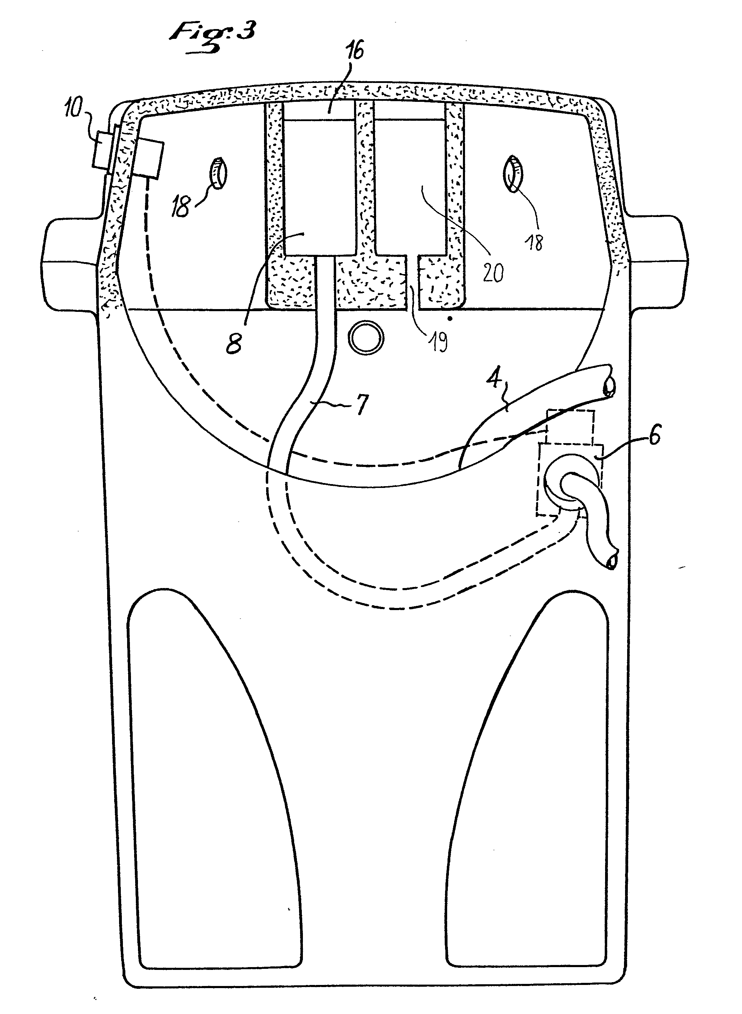

La figure 3 représente une vue en coupe transversale selon la ligne III-III de la figure 1.

Les installations de water-closet de ce type sont d'une grande utilité et se répandent étant donné leurs avantages, permettant d'être installées en tout endroit, même sans disposer d'un raccordement sur le réseau du tout-à-l'égout ; elles peuvent en outre être alimentées directement en eau sans effet de chasse, en ne nécessitant ainsi qu'une faible consommation d'eau d'évacuation.

A cet effet, le fond du bassin ou de la cuvette 1 est relié à la chambre de broyage 2 où tourne le rotor 3 provoquant la réduction des matières et la mise en rotation avec un échappement centrifuge vers la conduite d'évacuation 4.

L'innovation, objet de la présente demande concerne l'alimentation en eau de la cuvette ou bassin 1.

L'arrivée d'eau 5 est branchée sur le réseau général d'alimentation et elle aboutit à un obturateur par exemple constitué d'une électrovanne 6 commandée par un bouton-poussoir (non représenté) et à la disposition de l'utilisateur.

Selon un procédé connu, l'électrovanne est programmé de façon à fonctionner pendant une période de temps déterminée après l'enclenchement par la commande de l'utilisateur intervenant sur le bouton-poussoir ; par exemple l'électrovanne est programmée pour débiter l'eau immédiatement avant la mise en mouvement du broyeur, le débit de l'eau se poursuivant quelques secondes après l'arrêt du broyeur de façon à assurer le maintien dans le fond de la cuvette d'une quantité minimum d'eau (remplissant également la chambre de broyage 2).

Une conduite 7 reçoit l'eau sortant de l'électrovanne 6 et amène cette eau à la chambre intermédiaire 8 située dans une excroissance creuse formant coffret 9 disposée sur la partie arrière de la cuvette.

La chambre 8, contenue dans le coffret supérieur 9, est refermée sur toutes ces faces à l'exception du passage 11 défini au-dessus du bord supérieur 12 de la paroi avant 13 formant surverse et permettant à l'eau de s'échapper par gravité par le conduit 14 aboutissant à la goulotte 15 entourant le bord supérieur de la cuvette 1.

Dans ces conditions l'eau ayant rempli rapidement la chambre 8 s'échappe par la surverse 12 et ayant rempli la goulotte 15 se répand sous forme d'un film sur toute la paroi de la cuvette 1 en assurant ainsi les meilleures conditions de nettoyage de cette paroi lors de l'évacuation comme lors du rinçage.

On comprend que dans ces conditions la canalisation d'arrivée 5 est toujours isolée par une mise à l'air libre de l'espace intérieur de la cuvette 1.

En supposant en effet qu'à la suite d'une absence accidentelle de coupure au niveau de l'électrovanne 6 et en cas d'absence d'évacuation, le bassin ou cuvette 1 se remplisse, l'eau ne pourrait dépasser la limite constituée par le bord supérieur 16 de la cuvette, c'est-à-dire un niveau défini par la ligne (pointillée) 17 ; au-delà l'eau se déverse vers l'extérieur, à moins d'interposer un système de trop-plein de type connu ; mais en aucun cas, l'eau ne peut remonter jusqu'au niveau de la surverse 12.

Dans ces conditions, l'espace supérieure de la chambre intermédiaire 8 est toujours à l'air libre.

En outre et à titre de sécurité complémentaire on a prévu les passages 18, 18' sur la paroi arrière du passage 14, et une ouverture 19 faisant communiquer la chambre 20 avec l'atmosphère ; ces trois passages sont isolés de la chambre 8 et les passages 18, 18' sont situés à un niveau supérieur par rapport au film maximum de l'eau 17, de sorte qu'en cas d'aspiration au niveau de la chambre 8, l'air atmosphérique passant par les ouvertures 18, 18' alimentera la chambre et le réseau d'eau sanitaire éventuellement en dépression sera simplement alimenté en air atmosphérique, sans rique de réaspiration des eaux polluées depuis la cuvette 1.

L'invention est applicable à tout dispositif d'alimentation d'un appareil sanitaire quelconque.

L'invention permet notamment d'alimenter un appareil tel qu'un bidet ou une baignoire à partir d'une goulotte périphérique ; l'alimentation de l'ensemble du bassin par une goulotte périphérique présente des avantages certains en permettant par exemple de préchauffer les parois de la baignoire et en évitant le phénomène de contact d'une paroi froide et de refroidissement rapide dû au volant thermique que constitue la masse de fonte de la baignoire dont une partie seulement a été réchauffée progressivement.

Pareillement, en fin d'utilisation, l'alimentation en eau, lors de l'opération de rinçage, selon un film s'écoulant sur toute la surface de la paroi permet un rinçage et un nettoyage des parois facilitant tout au moins à l'utilisateur la manœuvre de rinçage et de remise en état de propreté de l'appareil après usage.

La disposition des deux chambres jumelées 8 et 20 permet d'utiliser indifféremment l'une ou l'autre comme chambre d'alimentation en eau, la seconde chambre communiquant alors avec l'atmosphère. Ceci permet d'adapter le dispositif à la configuration de l'alimentation en eau du local où il est destiné à être placé.

## Revendications

1. Appareil sanitaire du type comportant un bassin (1) apte à contenir l'eau sanitaire en période d'utilisation et alimenté en eau par une canalisation, raccordée au réseau de distribution générale, l'appareil comportant des moyens aptes à empêcher tout refoulement par aspiration depuis le bassin vers le réseau, du type comportant une chambre intermédiaire de mise à l'air libre alimentée par la canalisation d'alimentation en eau sanitaire, raccordée au réseau (5) et débouchant dans ladite chambre, avec interposition en amont de la zone, d'un obturateur réglable tel que robinet (6) ou autre, caractérisé en ce que ladite chambre comporte une paroi de surverse ou déversoir (13) par laquelle l'eau est apte à s'échapper par gravité vers le bassin, le niveau supérieur (12) de ladite surverse ou déversoir étant situé plus haut par rapport au fil (17) de l'eau du bassin lorsque ce dernier a atteint son niveau de remplissage maximum, la chambre intermédiaire (8) étant en communication avec l'air libre par une ouverture (18, 18') communiquant avec la partie supérieure de ladite chambre et le raccordement (7) de l'eau sanitaire alimentant l'appareil et débouchant dans la chambre (8) est situé à un niveau inférieur par rapport au fil (17) de l'eau lorsque le bassin a atteint son niveau de remplissage maximum, la chambre étant remplie par le courant ascendant de l'eau jusqu'à ce que cette dernière déborde par la surverse ou déversoir (13) pour alimenter par gravité le bassin.

2. Appareil sanitaire selon l'une des revendications 1, 2 ou 3, caractérisé en ce qu'il comporte sur le pourtour du bassin une goulotte (15) sensiblement plane (du type connu en soi) entourant au moins partiellement le bord supérieur dudit bassin située dans un plan sensiblement horizontal et recueillant l'eau déversée depuis la chambre intermédiaire (8) l'eau étant ainsi apte à se déverser et à remplir le bassin en formant un film recouvrant les parois de ce dernier.

## Claims

1. Sanitary apparatus of the type comprising a bowl (1), adapted to contain the sanitary water during use and being supplied with water by a supply conduit connected to the mains water supply, said apparatus comprising means to prevent any backflow through suction, from the bowl towards the mains supply, of the type comprising an intermediate chamber connected with the atmosphere, supplied by the conduit supplying the sanitary water, connected to the mains supply (5) and issuing into said chamber, with interposition upstream of the zone, of an adjustable obturator such as valve (6), or the like, characterized in that said chamber comprises an overflow wall or edge (13), over which the water can escape by gravity towards the bowl, the upper level (12) of said overflow being situated higher with respect to the water line (17) in the bowl when the latter has reached its maximum filling level, the intermediate chamber (8) communicating with the atmosphere via an opening (18, 18') which communicates with the upper part of said chamber, and the sanitary water conduit (7) supplying the apparatus and issuing into the chamber (8) is situated on a lower level with respect to the waterline (17) when the bowl has reached its maximum filling level, said chamber being filled by the upstream flow of the water until said water flows over the overflowing edge (13) to supply the bowl by gravity.

2. Sanitary according to one of claims 1, 2 or 3, characterized in that it is provided on the periphery of the bowl with a substantially plane gullet (15) (of a type known per se) surrounding at least partly the upper edge of the bowl, said gullet being situated in a substantially horizontal plane and collecting the water flowing in from the intermediate chamber (8), said water being thus able to flow into the bowl and fill it by forming a film over the walls thereof.

## Patentansprüche

1. Sanitäranlage bestehend aus einer Schüssel (1), von der Sanitärwasser während der Benutzung aufgenommen und vom allgemeinen Verteilernetz, an die sie angeschlossen ist, gespeist werden kann, und einer Einrichtung, durch die Stauwasser durch Ansaugen aus der Schüssel zum Netz vermieden werden kann, sowie einer Entlüftung-Zwischenkammer, die mit Sanitärwasser von der versorgenden Kanalisation gespeist wird, am Netz (5) liegt und in die Kammer mündet, wobei stromauf von der Zone ein regelbarer Verschluß wie ein Leitungsventil (6) oder dgl. zwischengeschaltet ist, dadurch gekennzeichnet, daß die Kammer eine Überlauf- oder Abflußwand (13) aufweist, durch die das Wasser durch Schwerkraft zur Schüssel ausfließen kann, wobei das höhere Niveau (12) des Überlaufs gegenüber dem Wasserstrom (17) der Schüssel dann höher liegt, wenn letztere ihren maximalen Füllstand erreicht hat, die Zwischenkammer (8) mit der Atmosphäre über eine Öffnung (18, 18') in Verbindung steht, die mit dem oberen Teil der Kammer in Verbindung steht, der Anschluß (7) des die Anlage speisenden Sanitärwassers, der in die Kammer (8) mündet liegt gegenüber dem Wasserstrom (17) dann auf einem höheren Niveau, wenn die Schüssel ihre maximale Füllung erreicht hat, und wobei die Kammer vom aufsteigenden Wasserstrom gefüllt wird, bis dieser über den Überfluß oder Abfluß (13) hinausgeht, um durch Schwerkraft die Schüssel zu füllen.

2. Sanitäranlage nach Anspruch 1, dadurch gekennzeichnet, daß um den Umfang der Schüssel eine allgemein ebene (dem Stande der Technik bekannte) Wasserablaufrinne verläuft, die zumindest zum Teil den oberen rand der Schüssel umgibt, die in einer allgemein horizontalen Ebene leigt und das von der Zwischenkammer abgeströmte Wasser aufnimmt, so daß das Wasser abströmen und die Schüssel füllen kann, indem sich ein Film bildet, der die Wände der Schüssel bedeckt.

Fig.1

Fig. 2

*Fig.3*